Europäisches Patentamt

European Patent Office

Office Européen des brevets

(19)

(11) Numéro de publication : **0 266 230 B1**

(12) # FASCICULE DE BREVET EUROPEEN

(45) Date de publication du fascicule du brevet :
**02.01.91 Bulletin 91/01**

(51) Int. Cl.⁵ : **B60H 1/00**

(21) Numéro de dépôt : **87402013.4**

(22) Date de dépôt : **09.09.87**

(54) Dispositif de climatisation à volet mélangeur pour véhicules et applications analogues.

(30) Priorité : **19.09.86 FR 8613156**

(43) Date de publication de la demande :
**04.05.88 Bulletin 88/18**

(45) Mention de la délivrance du brevet :
**02.01.91 Bulletin 91/01**

(84) Etats contractants désignés :
**DE ES IT**

(56) Documents cités :
**DE-A- 3 226 438**
**DE-U- 8 632 160**
**FR-A- 2 247 680**

(56) Documents cités :
**FR-A- 2 562 845**
**GB-A- 2 102 560**
**GB-A- 2 130 359**
**GB-A- 2 168 786**

(73) Titulaire : **VALEO THERMIQUE MOTEUR**
**8 rue Louis Lormand-La Verrière**
**F-78320 Le Mesnil Saint Denis (FR)**

(72) Inventeur : **Poitier, Gérard Claude Marcel**
**76 rue Louis Calmel**
**F-92230 Gennevilliers (FR)**

(74) Mandataire : **Coester, Jacques Charles et al**
**Cabinet Madeuf 3, avenue Bugeaud**
**F-75116 Paris (FR)**

EP 0 266 230 B1

Jouve, 18, rue Saint-Denis, 75001 PARIS

## Description

La présente invention concerne la climatisation des véhicules et plus particulièrement des véhicules terrestres.

La technique antérieure a fait connaître un grand nombre de dispositifs destinés à remplir la fonction ci-dessus.

La plupart des dispositifs comportent des conduites de sortie menant à des ouïes de dégivrage-désembuage, c'est-à-dire des ouïes ouvrant au voisinage du pare-brise, et éventuellement des vitres latérales du véhicule et des conduites menant à des ouïes dites de chauffage qui débouchent près du plancher du véhicule.

La plupart des dispositifs connus existants comportant des volets permettant de fermer plus ou moins les conduites menant vers les ouïes de dégivrage-désembuage, d'une part, et vers les ouvertures de chauffage, d'autre part.

Lorsque de l'air extérieur ne doit pas du tout être amené à l'intérieur du véhicule, il est nécessaire de prévoir un troisième volet fermant l'alimentation d'air extérieur.

Le nombre de volets est encore augmenté, lorsqu'on décide d'utiliser un boîtier à volet mélangeur, c'est-à-dire dans lequel on réalise un mélange d'air chaud et d'air froid dans une chambre dite de mélange dans laquelle une plus ou moins grande quantité d'air ayant traversé un échangeur est amenée, puis brassée avec l'air froid.

La présente invention crée un nouveau dispositif très simplifié dans lequel un seul volet permet d'assurer le mélange de veines d'air à des températures différentes et la distribution vers des ouïes de dégivrage-désembuage et des ouvertures de chauffage ou de refroidissement.

On connaît cependant par FR-A-2 562 845 un dispositif de climatisation pour véhicules du type dans lequel au moins un échangeur est disposé à l'intérieur d'un boîtier qui contient un volet pivotant pour le réglage de la température de l'air à l'intérieur d'une chambre de répartition qui comporte une ouverture de sortie menant à une chambre de mélange communiquant avec au moins des conduites respectivement dirigées vers des ouïes de dégivrage-désembuage et vers des ouvertures de chauffage ou de refroidissement.

Conformément à l'invention, la chambre de mélange contient une vanne creuse en demi-lune coopérant avec les bords de sièges pour obturer totalement ou partiellement l'une ou l'autre des conduites ou l'ouverture de sortie de la chambre de répartition.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une perspective schématique partielle du dispositif de climatisation de l'invention.

La fig. 2 est une coupe schématique du dispositif de climatisation pour véhicules, objet de l'invention, vue suivant la ligne II-II de la fig. 1.

Les fig. 3 à 7 sont des coupes schématiques illustrant différentes positions caractéristiques de la vanne de commande du dispositif de la fig. 1.

La fig. 8 est une perspective d'un mode de réalisation de la vanne des figures précédentes.

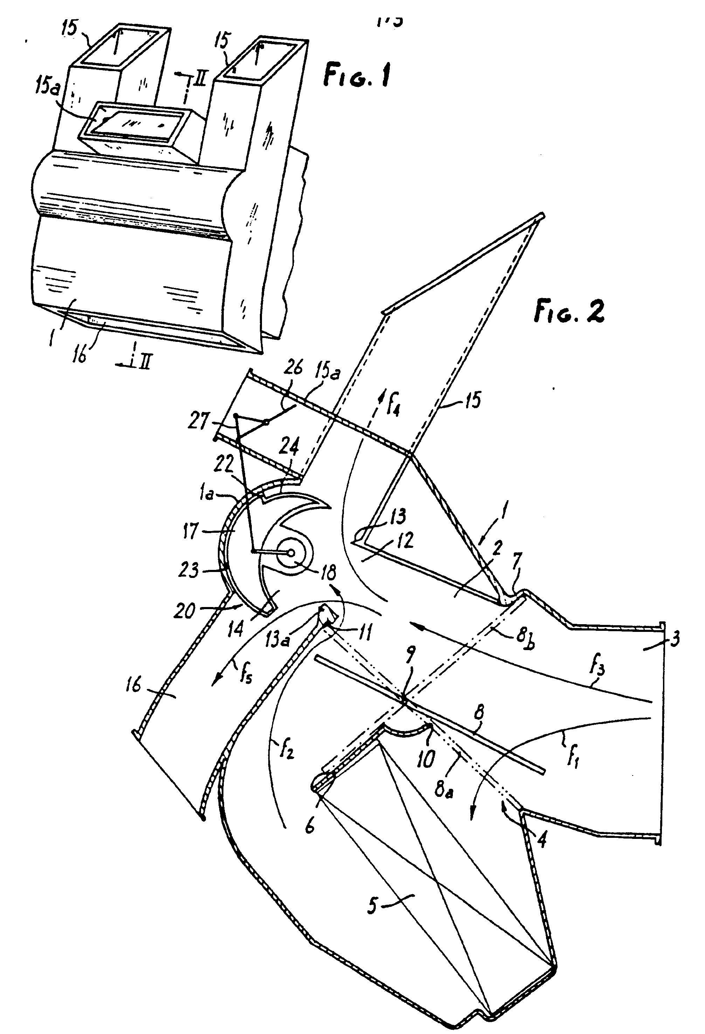

Les fig. 1 et 2 montrent de manière schématique l'ensemble du dispositif de climatisation qui comporte un boîtier désigné dans son ensemble par 1.

Le boîtier 1 délimite une chambre de répartition 2, formant un conduit d'admission d'air 3, conduisant directement à la chambre de répartition 2 et à une ouverture de dérivation 4 menant à au moins un échangeur de chaleur 5 maintenu entre la paroi du boîtier 1 et une cloison interne 6.

L'échangeur de chaleur 5 est le plus souvent constitué par un aérotherme de chauffage mais il peut être constitué par deux échangeurs, l'un servant à la circulation d'un fluide chaud, par exemple le liquide de refroisissement du moteur, l'autre à la circulation d'un fluide froid, par exemple le fluide frigorigène d'un circuit frigorifique.

Le boîtier 1 est conformé intérieurement pour délimiter une portée d'appui 7 alignée avec une partie de la cloison 6 pour servir de siège à un volet répartiteur 8 monté sur un arbre 9 pouvant être commandé depuis l'extérieur de boîtier 1 par tout moyen approprié connu dans la technique des dispositifs de climatisation.

Le boîtier 1 délimite également, par sa cloison 6 et sa paroi des sièges 10, 11 contre lesquels peuvent être appliquées, simultanément, des parties du volet répartiteur 8 lorsqu'il occupe la position illustrée en 8 a en traits interrompus. Dans ce cas, l'air de climatisation qui est pulsé dans la conduite 3 ne peut pas suivre le trajet des flèches $f_1$ et $f_2$, mais seulement le trajet suivant la flèche $f_3$, c'est-à-dire que cet air est empêché de traverser l'échangeur 5.

Lorsque le volet répartiteur 8 occupe l'autre position extrême qu'il peut prendre et qui est illustrée en 8 b, il prend appui sur la cloison 6 et contre le siège 7, de sorte que l'air pulsé par la conduite d'admission 3 ne peut pas suivre le trajet illustré par la flèche $f_3$, mais est obligé de suivre le trajet selon les flèches $f_1$ et $f_2$, c'est-à-dire qui l'air passe alors à travers l'échangeur 5.

Pour toutes les positions du volet répartiteur 8 intermédiaires aux deux positions décrites ci-dessus, des fractions plus ou moins importantes de l'air pulsé à travers la conduite d'admission 3 suivent le trajet des flèches $f_1$ et $f_2$, d'une part, et $f_3$, d'autre part, de sorte que l'air est ainsi plus ou moins chauffé ou refroidi selon que l'échangeur 5 est uniquement un échangeur de chauffage ou qu'il comporte aussi un échangeur refroidisseur.

Le boîtier 1 est conformé pour présenter une sortie 12 bordée par un siège 13 dont les deux bords opposés 13, 13 a sont représentés. La sortie 12 débouche dans une chambre de mélange 14 homogénéisant la température de l'air et à partir de laquelle le boîtier 1 forme au moins une conduite 15 menant vers des ouïes de dégivrage et désembuage et au moins une conduite 16 menant vers d'autres ouïes disposées, par exemple, sensiblement au niveau du plancher du véhicule. Un conduit frontal 15 a peut être prévu pour s'étendre entre les conduites 15.

Comme le montre le dessin, les conduites 15 et 16 sont disposées approximativement à 180° l'une par rapport à l'autre.

La chambre de mélange 14 contient une vanne 17 conformée sensiblement à la manière d'une demi-lune à double parois 20, 21.

La fig. 8 montre que la vanne 17 est supportée par un axe 18 et un arbre 19 permettant de l'actionner depuis l'extérieur du boîtier 1.

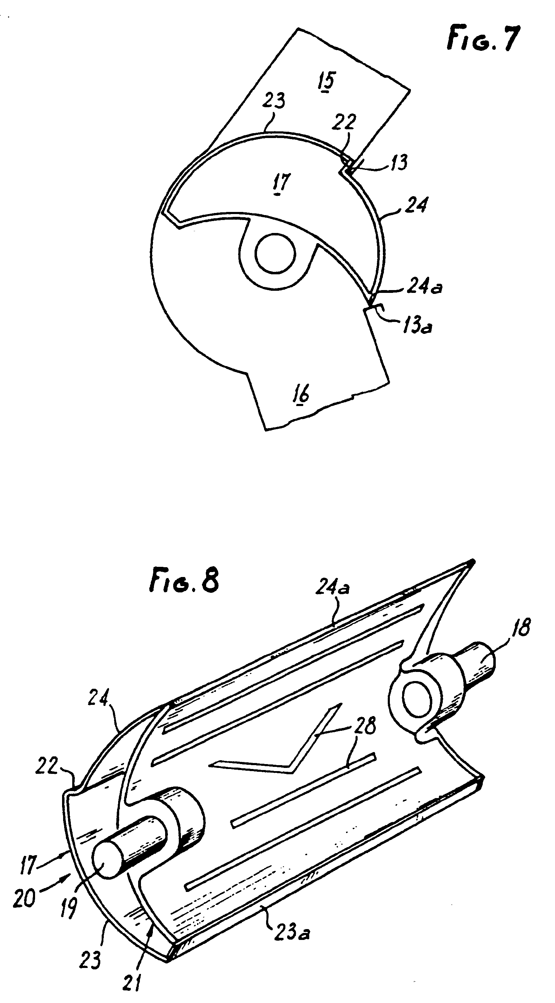

Comme l'illustre la fig. 8, la vanne présente dans sa paroi 20 un décrochement 22 faisant qu'elle délimite deux arcs 23, 24. L'arc 23 est cylindrique et concentrique à la paroi 1 a du boîtier 1 dans sa partie qui joint les conduites 15 et 16 (fig. 1). L'arc cylindrique 23 est de rayon adapté à celui de la surface interne de la partie de paroi 1 a. L'arc 24 est cylindrique ou d'une autre forme et de plus petit rayon pour ménager un passage de fuite avec la partie de siège 13 comme cela est expliqué dans ce qui suit en se référant à la fig. 6.

Les bords extrêmes 23 a, 24 a peuvent être munis de lèvres souples d'étanchéité pour coopérer avec les bords opposés 13, 13 a du siège 13.

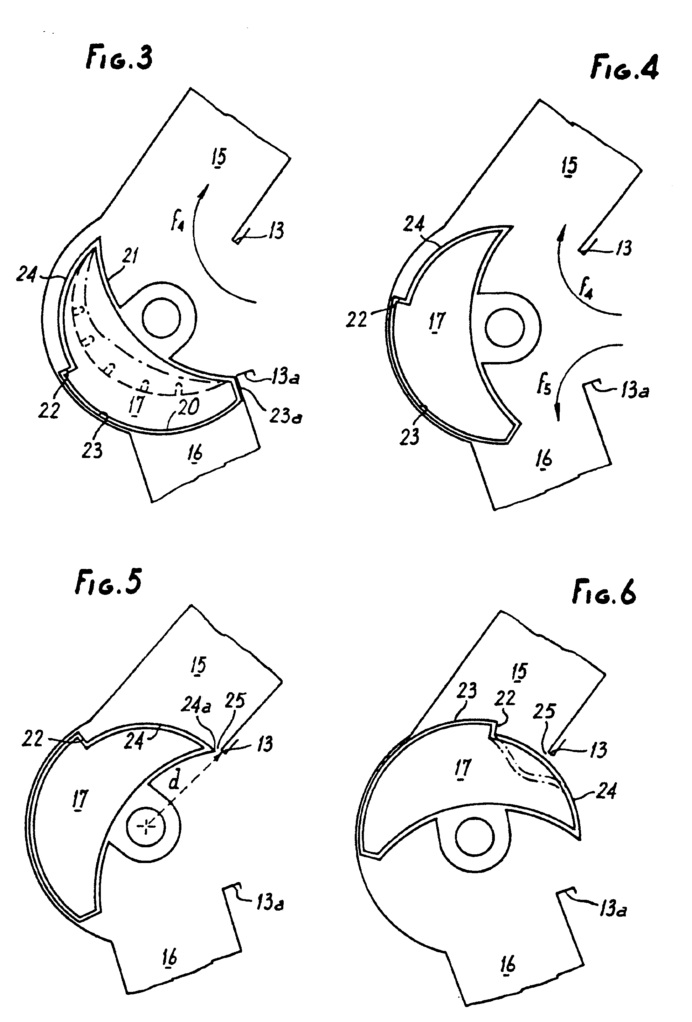

Les fig. 3 à 7 montrent différentes positions caractéristiques pouvant être occupées par la vanne 17 en demi-lune.

Lorsqu'il est souhaité de procéder à un dégivrage ou désembuage intense et que seule la conduite 15 doit être alimentée, la vanne 17 est amenée dans la position illustrée à la fig. 3 pour laquelle le lèvre d'étanchéité 23 a, ou le bord correspondant de la vanne s'il n'existe pas de lèvre d'étanchéité, vient en appui contre le côté latéral du bord 13 a du siège 13. De cette manière, l'air arrivant suivant la flèche $f_2$ ou suivant la flèche $f_3$ (fig. 2) est dirigé uniquement vers la ou les conduites 15 dans le sens de la flèche $f_4$, puisque la conduite 16 est complètement obturée. L'air est également mené vers le conduit frontal 15 a mais celui-ci est avantageusement muni d'un papillon 26 dont la commande peut être synchronisée à celle de la vanne 17 par une liaison 27 d'un type quelconque connu dans la technique.

Lorsque le désembuage est estimé suffisant, la vanne 17 est amenée dans une position intermédiaire telle que représentée aux fig. 2 et 4, de sorte que de l'air ayant ou non été chauffé ou refroidi, suivant la position occupée par le volet répartiteur 8, passe suivant les flèches $f_4$ et $f_5$, dans les conduites 15 et 16 et éventuellement 15 a.

La forme de préférence cylindrique de la paroi interne 21 de la vanne 17 a pour effet de réduire la perte de charge du circuit d'air. En outre, le choix du rayon de la paroi 21 est des saillies ou lumières 28 éventuellement prévues assure le mélange intime de l'air chaud et de l'air froid dans la chambre de mélange 2 avant que celui-ci pénètre dans les conduites 15, 16 et éventuellement 15 a.

Le brassage de l'air est encore amélioré, par le décrochement 22 à l'intérieur de la vanne 17 ainsi que par des protubérances formées à l'intérieur de la vanne lorsque celle-ci présente des lumières 28.

Lorsqu'il est souhaité que de l'air ne soit plus soufflé vigoureusement vers les ouïes de désembuage, la vanne 17 est tournée pour être amenée dans la position illustrée par la fig. 5, c'est-à-dire que le bord 24 a de la vanne 17 est amené à l'aplomb du bord 13 du siège.

Etant donné que le rayon du secteur 24 est plus petit que la distance d séparant l'axe géométrique des axe et arbre 18, 19 de la partie du siège 13, un espace 25 est maintenu libre, ce qui consitue une fuite pouvant être calibrée pour le passage d'air devant être dirigé notamment vers le pare-brise du véhicule pour empêcher qu'il soit à nouveau embué. Le secteur 24 peut être cylindrique ou présenter une forme complexe comme illustré schématiquement à la fig. 6.

La vanne 17 peut occuper évidemment toutes les positions comprises entre celles illustrées à la fig. 2 et à la fig. 5 pour diriger un flux d'air plus ou moins important vers les ouïes de désembuage et celles de chauffage ou refroidissement situées à proximité du plancher du véhicule.

La fig. 6 montre qu'en continuant à faire tourner la vanne 17, l'espace de fuite 25 est conservé mais que la sortie 12 de l'air venant de la chambre de répartition 2 est progressivement obturée, ce qui permet de réduire la quantité d'air amenée vers les ouïes dites de chauffage.

Lorsqu'il est souhaité d'interrompre complètement l'amenée d'air dans le véhicule, la vanne 17 est pivotée comme l'illustre la fig. 7, c'est-à-dire que la partie externe du décrochement 22 prend appui contre la paroi extérieure du bord 13 du siège, tandis que la lèvre d'étanchéité 24 a du secteur 24 prend appui contre le siège 13 a, ce qui assure la fermeture complète de la sortie 12 et l'isolement de la chambre de répartition 2 des conduites 15, 16.

Dans ce qui précède, il a été considéré que le volet mélangeur 8 et la vanne en demi-lune 17 étaient commandés manuellement. On ne sortirait pas du cadre de l'invention en reliant les arbres de commande du volet mélangeur 8, de la vanne 17 et du papillon 26 par des moyens assurant leur synchronisation ou encore par des moyens asservis à un dispositif de mesure de température régnant dans l'habitacle du véhicule ou à l'extérieur de celui-ci.

## Revendications

1. Dispositif de climatisation pour véhicules du type dans lequel au moins un échangeur (5) est disposé à l'intérieur d'un boîtier (1) qui contient un volet pivotant (8) pour le réglage de la température de l'air à l'intérieur d'une chambre de répartition (2) qui comporte une ouverture de sortie (12) menant à une chambre de mélange (14) communiquant avec au moins des conduites (15, 16) respectivement dirigées vers des ouïes de dégivrage-désembuage et vers des ouvertures de chauffage ou de refroidissement, caractérisé en ce que la chambre de mélange (14) contient une vanne creuse (17) en demi-lune coopérant avec les bords (13, 13a) de sièges pour obturer totalement ou partiellement l'une ou l'autre des conduites (15 et 16) ou l'ouverture de sortie (12) de la chambre de répartition (2).

2. Dispositif suivant la revendication 1, caractérisé en ce que les conduites (15, 16) font entre elles un angle voisin de 180°.

3. Dispositif suivant l'une des revendications 1 ou 2, caractérisé par un conduit frontal (15 a) relié à la chambre de répartition (2) et contrôlé par un papillon (26).

4. Dispositif suivant l'une des revendications 1 à 3, caractérisé en ce que la vanne (17) présente deux parois (20, 21) sensiblement en demi-lune, la paroi externe présentant un secteur délimitant un arc de cylindre sur une partie de sa longueur pour correspondre à la paroi de la chambre de mélange (14).

5. Dispositif suivant l'une des revendications 1 ou 4, caractérisé en ce que la vanne en demi-lune présente dans sa parois externe (20) une partie de paroi (23) de rayon correspondant à celui de la chambre cylindrique (14) et une partie de paroi (24) de rayon plus petit délimitant avec la partie précédente un décrochement (22) venant en appui contre un bord (13) du siège entourant l'ouverture de sortie (12) lorsque l'extrémité (24a) de la paroi (24) de plus petit rayon vient elle-même en butée contre la partie de siège (13 a) bordant le côté opposé de l'ouverture de sortie (12).

6. Dispositif suivant la revendication 5, caractérisé en ce que la partie de paroi (24) est non circulaire.

7. Dispositif suivant l'une des revendications 1 à 6, caractérisé en ce que la partie de paroi (24) de plus petit rayon de la vanne (17) présente des rayons plus petits que la distance d séparant l'axe géométrique des axe et arbre d'articulation (18, 19) du bord (13) du siège entourant l'ouverture de sortie (12) de sorte qu'un espace de fuite (25) est ménagé entre la partie de la paroi (24) et ledit bord (13) du siège.

8. Dispositif suivant l'une des revendications 1 à 7, caractérisé en ce que la longueur de la paroi (24) de plus petit rayon correspond à la distance séparant les bords (13, 13 a) du siège de l'ouverture de sortie (12) de sorte que cette ouverture est complètement obturée lorsque, d'une part, l'extrémité (24a) de la paroi de plus petit rayon prend appui sur le bord (13 a) du siège et que, d'autre part, le décrochement (22) prend appui sur le bord (13) opposé du même siège.

9. Dispositif suivant l'une des revendications 1 à 8, caractérisé en ce que la vanne (17) est reliée au papillon (26) contrôlant l'ouverture du conduit frontal (15 a).

10. Dispositif suivant l'une des revendications 1 à 9, caractérisé en ce qu'au moins la vanne (17) est commandée par un dispositif sensible à la température régnant dans l'habitacle du véhicule et/ou au dehors de celui-ci.

11. Dispositif suivant l'une des revendications 1 à 10, caractérisé en ce que les mouvements de la vanne (17) et du volet répartiteur (8) sont synchronisés.

12. Dispositif suivant l'une des revendications 1 à 11, caractérisé en ce qu'au moins la paroi interne (21) de la vanne (17) présente des saillies et/ou des lumières (28).

## Ansprüche

1. Fahrzeugklimatisiervorrichtung von der Art, bei der wenigstens ein Austauscher (5) im Innern eines Gehäuses (1) angeordnet ist, welches eine drehbare Klappe (8) zur Regelung der Lufttemperatur im Innern einer Verteilungskammer (2) enthält, die eine Austrittsöffnung (12) aufweist, welche in eine Mischkammer (14) führt, die wenigstens mit Leitungen (15, 16) in Verbindung steht, welche jeweils zu Entfroster-Antibeschlag-Öffnungen sowie zu Heiz- und Kühlöffnungen führen, **dadurch gekennzeichnet,** daß die Mischkammer (14) einen halbmondförmigen Hohlschieber (17) enthält, der mit den Kanten (13, 13a) von Sitzen zusammenwirkt, um die eine oder die andere der Leitungen (15 und 16) oder die Austrittsöffnung (12) der Verteilungskammer (2) ganz oder teilweise zu verschließen.

2. Vorrichtung nach Anspruch 1, **dadurch gekennzeichnet,** daß die Leitungen (15, 16) einen Winkel in der Nähe von 180° zueinander bilden.

3. Vorrichtung nach einem der Ansprüche 1 oder 2, **gekennzeichnet durch** eine vordere Leitung (15a), die mit der Verteilungskammer (2) verbunden ist und durch eine Klappe (26) geregelt wird.

4. Vorrichtung nach einem der Ansprüche 1 bis 3, **dadurch gekennzeichnet,** daß der Schieber (17) zwei im wesentlichen halbmondförmige Wände (20, 21) aufweist, wobei die Außenwand einen Sektor aufweist, der über einen Teil der Länge einen Zylinderbogen begrenzt, um der Wandung der Mischkammer (14) zu entsprechen.

5. Vorrichtung nach einem der Ansprüche 1 oder 4, **dadurch gekennzeichnet**, daß der halbmondförmige Schieber in der Außenwand (20) einen Wandteil (23) aufweist, dessen Radius dem der zylindrischen Kammer (14) entspricht, sowie einen Wandteil (24) mit einem kleineren Radius, der mit dem vorgenannten Teil einen Absatz (22) bildet, der auf einer Kante (13) des Sitzes rund um die Austrittsöffnung (12) aufliegt, wenn das Ende (24a) der Wand (24) mit kleinerem Radius seinerseits am Teil des Sitzes (13a) anschlägt, der die der Austrittsöffnung (12) gegenüberliegende Seite begrenzt.

6. Vorrichtung nach Anspruch 5, **dadurch gekennzeichnet**, daß der Wandteil (24) nicht kreisförmig ist.

7. Vorrichtung nach einem der Ansprüche 1 bis 6, **dadurch gekennzeichnet**, daß der Wandteil (24) mit kleinerem Radius des Schiebers (17) kleinere Radien aufweist als der Abstand d, der die geometrische Achse von der Gelenkachse und -welle (18, 19) der Kante (13) des Sitzes trennt, welcher die Austrittsöffnung (12) umgibt, so daß zwischen dem Teil der Wand (24) und der genannten Kante (13) des Sitzes ein Leckageraum (25) entsteht.

8. Vorrichtung nach einem der Ansprüche 1 bis 7, **dadurch gekennzeichnet**, daß die Länge der Wand (24) mit kleinerem Radius dem Abstand entspricht, der die Kanten (13, 13a) des Sitzes von der Austrittsöffnung (12) trennt, so daß diese Öffnung vollständig geschlossen ist, wenn einerseits das Ende (24a) der Wand mit kleinerem Radius auf der Kante (13a) des Sitzes zur Auflage kommt und wenn andererseits der Absatz (22) auf der dem gleichen Sitz gegenüberliegenden Kante (13) zur Auflage kommt.

9. Vorrichtung nach einem der Ansprüche 1 bis 8, **dadurch gekennzeichnet**, daß der Schieber (17) mit der Klappe (26) verbunden ist, die die Öffnung der vorderen Leitung (15a) regelt.

10. Vorrichtung nach einem der Ansprüche 1 bis 9, **dadurch gekennzeichnet**, daß wenigstens der Schieber (17) durch eine Vorrichtung gesteuert wird, die für die in der Fahrzeugkabine und/oder außerhalb derselben vorherrschende Temperatur empfindlich ist.

11. Vorrichtung nach einem der Ansprüche 1 bis 10, **dadurch gekennzeichnet**, daß die Bewegungen des Schiebers (17) und der Verteilerklappe (8) synchronisiert sind.

12. Vorrichtung nach einem der Ansprüche 1 bis 11, **dadurch gekennzeichnet**, daß wenigstens die Innenwand (21) des Schiebers (17) Vorsprünge und-/oder Schlitze (28) aufweist.

## Claims

1. Air conditioning device for vehicles of the type in which at least one heat exchanger (5) is installed inside a box (1) which contains a pivoting flap (8) for adjustment of the temperature of air inside a distributing chamber (2) which comprises an outlet (12) leading to a mixing chamber (14) communicating with at least several ducts (15, 16) respectively directed towards defroasting-dedumming holes and towards heating/ cooling apertures, characterized in that the mixing chamber (14) contains a hollow valve (17) in a half-moon shape cooperating with the edges (13, 13a) of seats for obturating totally or partially either one or the other of the ducts (15 and 16) or the outlet (12) of the distributing chamber (2).

2. Device according to claim 1, characterized in that the ducts (15, 16) form therebetween an angle of about 180°.

3. Device according to one of claims 1 or 2, characterized by a frontal duct (15a) connected to the distributing chamber (2) and controlled by a butterfly (26).

4. Device according to one of claims 1 to 3, characterized in that the valve (17) has two walls (20, 21) substantially in a half-moon shape, the outer wall having a sector forming an arc of cylinder on a part of its length for corresponding to the wall of the mixing chamber (14).

5. Device according to one of claims 1 or 4, characterized in that the valve in a half-moon shape has in its outer wall (20) a wall portion (23) of a radius corresponding to that of the cylindrical chamber (14) and a wall portion (24) of a shorter radius forming with the preceding portion a step (22) coming to bear on an edge (13) of the seat surrounding the outlet (12) when the end (24a) of the wall (24) having the shorter radius comes itself into abutment against the seat portion (13a) bordering the opposite side of the outlet (12).

6. Device according to claim 5, characterized in that the wall portion (24) is uncircular.

7. Device according to one of claims 1 to 6, characterized in that the wall portion (24) of the valve (17) having the shorter radius has radii shorter than the distanced separating the geometrical axis from the articulation axis and shaft (18, 19) from the edge (13) of the seat surrounding the outlet (12), whereby an escape space (25) is provided between the wall portion (24) and said edge (13) of the seat.

8. Device according to one of claims 1 to 7, characterized in that the length of the wall (24) having the shorter radius corresponds to the distance separating the edges (13, 13a) of the seat from the outlet (12), whereby this aperture is completely obturated when, on the one hand, the end (24a) of the wall having the shorter radius comes to bear on the edge (13a) of the seat and that, on the other hand, the step (22) comes to bear on the opposite edge (13) of the same seat.

9. Device according to one of claims 1 to 8, characterized in that the valve (17) is connected to the butterfly (26) controlling the opening of the frontal duct (15a).

10. Device according to one of claims 1 to 9, characterized in that at least the valve (17) is controlled by a device sensitive to the heat prevailing in the inside of the vehicle and/or outside thereof.

11. Device according to one of claims 1 to 10, characterized in that the movements of the valve (17) and of the distributing flap (8) are synchronized.

12. Device according to one of claims 1 to 11, characterized in that at least the inner wall (21) of the valve (17) has protrusions and/or apertures (28).

FIG. 1

FIG. 2

# Fig.3

# Fig.4

# Fig.5

# Fig.6

Fig. 7

Fig. 8